Europäisches Patentamt

European Patent Office

Office européen des brevets

(19)

(11) Numéro de publication : **0 233 234 B1**

(12) **FASCICULE DE BREVET EUROPEEN**

(45) Date de publication du fascicule du brevet :
**31.07.91 Bulletin 91/31**

(51) Int. Cl.⁵ : **B29C 67/20, C08J 9/32, F16L 59/02**

(21) Numéro de dépôt : **86904850.4**

(22) Date de dépôt : **11.08.86**

(86) Numéro de dépôt international :
**PCT/FR86/00285**

(87) Numéro de publication internationale :
**WO 87/01070 26.02.87 Gazette 87/05**

(54) MATERIAU D'ISOLATION THERMIQUE DU TYPE SYNTACTIQUE, MACHINE ET PROCEDE POUR SA FABRICATION ET MOYEN D'ISOLATION COMPORTANT UN TEL MATERIAU.

(30) Priorité : **13.08.85 FR 8512332**

(43) Date de publication de la demande :
**26.08.87 Bulletin 87/35**

(45) Mention de la délivrance du brevet :
**31.07.91 Bulletin 91/31**

(84) Etats contractants désignés :
**AT BE CH DE GB IT LI NL SE**

(56) Documents cités :
**DE-A- 2 648 595
FR-A- 619 915
FR-A- 1 239 174
FR-A- 2 245 478
FR-A- 2 361 438
GB-A- 877 254
GB-A- 1 195 568
GB-A- 1 372 845
US-A- 3 300 421
US-A- 3 856 721
US-A- 4 287 245
RAPRA Abstracts, vol. 12, no. 35, aout 1975
(Shrewsbury, GB), "Freeze drying helps process syntatic foams"
See also references of WO8701070**

(73) Titulaire : **HUTCHINSON, SOCIETE ANONYME
2, rue Balzac
F-75008 Paris (FR)**

(72) Inventeur : **ARGY, Gilles
15ter, rue Nationale
F-78940 La Queue les Yvelines (FR)**
Inventeur : **CHEYMOL, André
15, route Descartes
F-86220 Dangé Saint Romain (FR)**
Inventeur : **PHALIP, Patricia
Résidence du Parc
F-45200 Montargis (FR)**
Inventeur : **VERSCHAVE, Adrien 392, rue Peynault
Amilly
F-45200 Montargis (FR)**

(74) Mandataire : **Ores, Irène et al
CABINET ORES 6, Avenue de Messine
F-75008 Paris (FR)**

## Description

L'invention a pour objet un materiau d'isolation thermique, du type syntactique, un procédé et une machine pour sa fabrication, ainsi que des moyens d'isolation comportant un tel matériau.

On sait que l'exploitation de champs pétroliers off-shore exige le transport, de l'huile ou du gaz extrait, par des canalisations ou conduites sous-marines qui doivent être isolées thermiquement. Les matériaux mis en oeuvre pour une telle appliquation doivent non seulement présenter de bonnes caractéristiques d'isolation thermique mais, en outre, ils doivent pouvoir résister aux pressions hydrostatiques élevées qui existent au fond de la mer et conserver leurs propriétés aux températures d'utilisation qui peuvent être de l'ordre de 120°C.

On a déjà proposé, dans ce but, des réalisations comportant une gaine en un matériau du type mousse de polyuréthane ou mousse de PVC à faible coefficient de conductibilité thermique. Cependant, comme ces matériaux ne présentent pas d'eux-mêmes des caractéristiques mécaniques suffisantes, eu égard notamment aux contraintes de pression hydrostatique pour le premier et eu égard aux contraintes de pression hydrostatique et de température pour le second, on doit associer à ces matériaux mousse d'autres moyens destinés à conférer à l'ensemble les qualités requises.

On peut alors envisager l'emploi d'autres matériaux connus, à faible coefficient de conductibilité thermique, par exemple un matériau composite incorporant des micro-sphères ou microbilles de verre creuses dans une matrice de résine polyester. Une telle mousse syntactique de polyester est décrite par exemple, dans GB-A-1.372.845

Si un tel matériau présente des caractéristiques mécaniques élevées, en particulier de rigidité, tout en étant notablement moins lourd que les matériaux usuels, il ne peut être mis en oeuvre que de manière très particulière dans le domaine de la protection de conduites sous-marines.

Or, pour des applications relatives à l'exploitation de champs pétrolifères off-shore ou, de façon générale, pour l'isolation thermique de canalisations transportant un fluide présentant un gradient thermique élevé avec l'environnement, comme par exemple des canalisations enterrées de chauffage urbain, les moyens d'isolation doivent non seulement présenter les caractéristiques énoncées ci-dessus mais, en outre, doivent pouvoir subir des déformations relativement importantes sans qu'il n'apparaisse de dommages, comme des ruptures, la ou le matériau est amené à prendre la forme d'une surface à faible rayon de courbure.

La raison en est que, quelle que soit la technique de pose des conduites sous-marines, - utilisation d'une barge sur laquelle des tronçons successifs et adjacents sont reliés entre eux puis immergés, ou bien assemblage à terre puis remorquage sous l'eau de la conduite assemblée -, des zones d'inflexion de la conduite apparaissent, lesquelles peuvent conduire à des détériorations des moyens d'isolation thermique lorsque le matériau mis en oeuvre pour de tels moyens n'est pas suffisamment souple.

On connaît également, par DE-A-2 648 595 un matériau syntactique constitué par une matrice en polybutadiène comportant 50 à 80% d'unités 1.2 et d'un poids moléculaire moyen inférieur à 100.000 dans laquelle sont noyées des microbilles de verre creuses dans une proportion générale comprise de 5 à 50 parties en poids de microbilles pour 100 parties de polybutadiène. Le matériau obtenu est décrit dans le document cité comme approprié à la réalisation d'objets destinés à résister à des pressions hydrostatiques élevées, sans absorption d'eau, par exemple pour la fabrication de revêtements de scaphandres ou de sous-marins. Il n'est pas prévu pour être utilisé en tant que matériau d'isolation thermique et c'est précisément un but de l'invention que de pourvoir à un matériau d'isolation thermique du type syntactique, qui réponde d'une manière satisfaisante aux exigences contradictoires rappelées ci-dessus, à savoir, présenter un faible coefficient de conductivité thermique et une résistance élevée aux pressions hydrostatiques et cela jusqu'à des températures d'au moins 115-120°C avec, simultanément, une capacité de déformation telle que le matériau puisse être mis en forme, ou subir une déformation lui conférant localement un faible rayon de courbure sans perte de ses qualités.

C'est, aussi, un but de l'invention de fournir un procédé pour la fabrication industrielle d'un tel matériau comportant une matrice renfermant une charge de microbilles ou microsphères de verre creuses.

C'est, encore, un but de l'invention de fournir un moyen d'isolation thermique faisant application d'un tel matériau syntactique et qui soit particulièrement bien adapté pour son utilisation sur des canalisations d'exploitation de champs pétroliers et/ou gaziers off-shore, ou sur des canalisations enterrées de chauffage urbain, par exemple.

Ces buts sont atteints, selon l'invention, par un matériau d'isolation thermique du type syntactique d'une densité comprise entre environ 0,5 et 0,65 et d'un coefficient de conductivité thermique λ compris entre environ 90 et 130 mWm$^{-1}$K$^{-1}$, ledit matériau résistant à une température de l'ordre de 120°C, étant pratiquement dépourvu de fluage à cette température sous une pression hydrostatique de l'ordre de 40 Bars et étant, en outre, suffisamment souple pour pouvoir subir un allongement de 7 à 10 % sans rupture et sans perte de ses propriétés, ledit matériau étant obtenu en incorporant dans une matrice une charge de microbilles de verre creuses dans une proportion de 40 à 80 % en volume par rapport à ladite matrice, laquelle est choisie parmi les élas-

EP 0 233 234 B1

tomères du type caoutchouc naturel, polychloroprène, copolymère styrène-butadiène (SBR), copolymère butadiène-acrylonitrile (NBR), polynorbornène, éthylène-propylène-diènes monomères (EPDM), caoutchoucs butyle et analogues, la liaison des microbilles de verre creuses à la matrice étant réalisée par un agent de pontage constitué par un isocyanate ou un silane organo-fonctionnel présent dans une proportion comprise entre 1 et 10 % en poids par rapport à la matrice élastomère.

Le procédé selon l'invention, pour la fabrication d'un matériau syntactique, tel que défini ci-dessus, est caractérisé en ce que l'on incorpore la charge de microbilles de verre creuses dans la matrice, en ce que l'on mélange la charge et la matrice sans application d'efforts de cisaillement importants jusqu'à obtention d'un produit homogène et en ce qu'on soumet le produit à un traitement de réticulation.

Dans une forme de réalisation le traitement de réticulation est une vulcanisation.

Dans un mode opératoire la matrice est sous forme d'un latex.

Les microbilles de verre creuses sont alors traitées à l'aide d'un agent de pontage, comme un silane organofonctionnel, préalablement à leur incorporation dans le latex.

Dans un autre mode opératoire, la matrice est sous forme d'une dissolution.

Les microbilles de verre creuses sont alors incorporées à la matrice simultanément à l'adjonction à cette dernière d'un agent de pontage verre-élastomère comme un isocyanate ou un silane organofonctionnel.

La matrice peut être sous forme liquide.

En variante, elle est sous forme de poudre.

La poudre est avantageusement directement issue du procédé de fabrication de l'élastomère ou, en variante, est obtenue par broyage cryogénique d'un élastomère seul ou d'un mélange d'élastomère(s) et d'ingrédients comme des charges, des agents de protection et des agents de vulcanisation.

L'invention vise également un procédé pour la fabrication d'un matériau du type ci-dessus, caractérisé en ce que le produit homogène constitué par la matrice et la charge de microbilles de verre creuses est déposé sous forme d'une couche mince sur un support, en ce que ladite couche est soumise, le cas échéant, à une coagulation, puis à un séchage, et en ce que ces opérations sont répétées jusqu'à obtention de l'épaisseur souhaitée du matériau qui est alors soumis au traitement de réticulation, comme une vulcanisation.

Selon une autre caractéristique de l'invention, chacune des couches est déposée à la racle sur un support approprié suivant une épaisseur comprise entre 0,5 et 1 mm.

Dans une réalisation avantageuse, le procédé selon l'invention est réalisé en continu dans une multiplicité de bacs adjacents à disposition horizontale ou à disposition verticale avec interposition entre eux de zones de séchage et, in fine, une zone de vulcanisation.

Un moyen d'isolation thermique, suivant l'invention, utilisable notamment pour le calorifugeage de canalisations de transport d'un fluide présentant un gradient de température avec l'espace environnant, comme une conduite de transport d'huile ou de gaz de champ pétrolier off-shore, ou une canalisation de chauffage urbain, est caractérisé en ce qu'il comprend un manchon en le matériau syntactique défini ci-dessus, ledit manchon étant limité sur ses faces frontales antérieure et postérieure par des surfaces ondulées de formes conjuguées permettant l'emboîtement de manchons adjacents.

Dans une réalisation avantageuse, dans laquelle la canalisation proprement dite est revêtue d'une couche anti-corrosion en soi connue, les manchons sont enfilés à glissement sur ladite couche et solidarisés avec elle à l'aide d'adhésifs à haut module, en particulier du type époxy et, complémentairement, les manchons adjacents sont solidarisés entre eux au moyen d'adhésifs à bas module, en particulier du type polyuréthane, polysulfure et/ou polychloroprène.

L'invention sera bien comprise par la description qui suit, faite à titre d'exemple et en référence au dessin annexé dans lequel :

– la figure 1 est une vue très schématique d'une machine de fabrication d'un matériau selon l'invention ; et

– la figure 2 est une vue schématique partielle, en coupe, d'un moyen d'isolation thermique selon l'invention.

Pour l'obtention d'un matériau syntactique de faible conductivité thermique, de l'ordre de 90 à 130 mWm$^{-1}$K$^{-1}$, résistant à des températures de l'ordre de 120°C, pratiquement dépourvu de fluage à cette température sous une pression hydrostatique de l'ordre de 40 bars et qui, en outre, soit suffisamment souple pour pouvoir subir un allongement de 7 à 10 % sans rupture et sans perte de ses propriétés, l'invention prévoit de noyer une charge de microbilles de verre creuses, dans une proportion de 40 à 80 % en volume dans une matrice choisie parmi les élastomères du type du caoutchouc naturel, du polychloroprène, des copolymères styrène-butadiène (SBR), des copolymères-butadiène-acrylonitrile (NBR), du polynorbornène, des éthylène-propylène-diènes monomères (EPDM), des caoutchoucs butyle, et analogues. La matrice permet d'obtenir pour le matériau syntactique de l'invention les caractéristiques de souplesse recherchée, tandis que l'utilisation de microbilles de verre creuses permet l'introduction dans la matrice de gaz favorable à l'obtention d'un faible coefficient de

3

conductibilité thermique tout en assurant les qualités requises de résistance à la pression en raison de la forme sphérique des particules de la charge à laquelle sont attachés un module élevé et une résistance intrinsèque spécifique.

L'adjonction à une matrice en matériau élastomère de microbilles de verre creuses, ayant une résistance à l'écrasement inférieure à 4.000 psi, ne peut pas, cependant, être réalisée par les techniques usuelles d'incorporation de charges minérales ou de noir de carbone au caoutchouc ou analogue. Les essais effectués par la Demanderesse sur des mélangeurs BANBURY, ou sur des mélangeurs ouverts à cylindre, ont tous conduit à des produits inacceptables, les microbilles de verre étant brisées par les efforts de cisaillement élevés nécessaires à leur bonne dispersion dans le caoutchouc.

Après abandon de cet axe de recherche, la Demanderesse a constaté, de façon surprenante, que de bons résultats pouvaient être obtenus en procédant à l'incorporation des microbilles de verre creuses dans la matrice élastomère sous forme pulvérulente ou sous forme liquide et cela par des procédés qui n'imposent pas aux microbilles de verre des contraintes de cisaillement élevées susceptibles de les écraser.

De façon plus précise, l'invention prévoit dans un premier mode opératoire d'effectuer le mélange des microbilles de verre creuses et de l'élastomère à l'état liquide en incorporant les microbilles à la matrice alors que celle-ci est sous forme d'un latex.

Ce dernier est formulé suivant les méthodes usuelles.

Compte tenu de ce qu'il n'est pas possible d'introduire des charges sèches dans un latex, d'une part et, d'autre part, de ce que l'adhérisation des microbilles de verre creuses à la matrice élastomère ne peut pas être obtenue directement, l'invention prévoit de traiter d'abord lesdites microbilles de verre creuses à l'aide d'un agent de pontage verre-élastomère, comme un silane organofonctionnel, puis de mettre lesdites microbilles de verre creuses ainsi traitées en suspension dans l'eau additionnée d'un agent épaississant du latex.

Après une courte période de repos de la suspension provoquant l'élimination de l'air, le latex est versé lentement sous agitation dans la suspension de microbilles de verre creuses pour l'obtention d'un mélange homogène, mais sans application de pression et sans application de forces de cisaillement importantes, comme indiqué ci-dessus.

Si le mode de coagulation choisi est une coagulation par action de la chaleur, on introduit alors dans le mélange un agent approprié de coagulation thermo-sensible.

Qu'un tel agent ait ou non été ajouté au mélange homogène, celui-ci est ensuite déposé à la racle sous forme d'une couche mince sur un support, comme un tapis métallique, où on procède à la coagulation de la partie latex, soit par action d'un agent coagulant externe préalablement pulvérisé sur le support, soit par action de la chaleur, soit encore par déshydratation ou par action du froid.

Après coagulation et, le cas échéant, essorage du latex, la couche mince déposée est séchée, par exemple à l'aide d'un courant d'air chaud ventilé ou encore à l'aide d'un rayonnement infra-rouge.

Le séchage est conduit, d'une part, de manière à être complet dans un temps relativement court, permettant ainsi une fabrication industriellement possible sur le plan économique et, d'autre part, de manière qu'il n'apparaisse aucune discontinuité à l'interface billes de verre creuses/latex susceptible de conduire à une porosité du produit final.

Lorsqu'une première couche mince a été obtenue par ce processus, celui-ci est reconduit pour la formation d'une nouvelle couche et cela jusqu'à obtention d'un matelas dont l'épaisseur est celle choisie pour le matériau isolant lequel est alors vulcanisé par les procédés usuels de vulcanisation du caoutchouc.

Dans un second mode opératoire, l'invention prévoit l'incorporation des microbilles de verre creuses dans une dissolution d'élastomère.

Dans ce mode de réalisation, l'élastomère qui est de tout type susceptible de former une dissolution est mis en solution dans un solvant approprié et les microbilles de verre creuses préalablement traitées comme indiqué ci-dessus, c'est-à-dire auxquelles on a associé un agent de pontage verre-élastomère, par exemple un isocyanate ou un silane organofonctionnel, sont introduites à l'état de poudre sèche dans la dissolution d'élastomère, sous agitation, mais sans pression et sans que soient créées des contraintes importantes de cisaillement.

La procédure est alors celle décrite ci-dessus pour le latex, c'est-à-dire dépôt à la racle d'une mince couche de mélange homogène sur un tapis métallique ou analogue, séchage de ladite couche en observant les conditions indiquées ci-dessus, dépôt d'une nouvelle couche de mélange et séchage de cette nouvelle couche, etc... jusqu'à obtention du nombre de couches nécessaire pour former par superposition un matelas ayant l'épaisseur souhaitée du matériau isolant. Lorsque cette épaisseur est atteinte, le matelas est maintenu assemblé sous pression et l'ensemble est alors soumis à un traitement de vulcanisation comme indiqué ci-dessus.

Dans encore un autre mode de réalisation, l'invention prévoit de réaliser le mélange de microbilles de verre creuses et de la matrice élastomère en incorporant lesdites microbilles de verre, - préalablement traitées pour permettre leur adhérisation satisfaisante ultérieure à la matrice -, dans un élastomère à l'état liquide.

4

Un tel procédé peut être mis en oeuvre pour les élastomères que l'on trouve dans le commerce sous cette forme, qu'il s'agisse de mono ou de bicomposants, c'est-à-dire pour des élastomères du type de ceux connus sous le nom de nitriles liquides, de polybutadiènes et autres.

Après obtention d'un mélange homogène de microbilles de verre creuses et d'élastomère à l'état liquide, on procède comme indiqué immédiatement ci-dessus en référence à une dissolution d'élastomère, sans que l'on fasse application, cependant, d'une opération de séchage.

Dans encore un autre mode de réalisation, les microbilles de verre creuses sont incorporées à l'élastomère alors que celui-ci est sous forme pulvérulente.

Dans ce mode de réalisation, bien approprié à la fabrication de matériaux thermiquement isolants dont la matrice est un élastomère du type nitrile ou polynorbornène, ou SBR, ou du type caoutchouc naturel, l'incorporation des microbilles de verre creuses est réalisée dans un mélangeur à poudre dans lequel on introduit initialement, outre l'élastomère en poudre, les ingrédients habituels des mélanges d'élastomères, c'est-à-dire des charges, des agents de protection, le cas échéant des agents de vulcanisation, de réticulation, etc... puis, petit-à-petit, les microbilles de verre creuses, lesquelles ont été préalablement traitées à l'aide d'un agent de pontage, comme un organosilane, pour assurer une adhérisation satisfaisante de la charge et de la matrice.

Lorsque le mélange en poudre est suffisamment homogène, il est introduit dans la trémie d'alimentation d'une machine d'extrusion, comme une boudineuse a vis : le passage de la poudre au travers de la machine contribue à l'obtention d'une bonne homogénéité du mélange tandis que par un choix convenable de la tête d'extrusion on obtient à la sortie de celle-ci le matériau d'isolation thermique à la forme et aux dimensions souhaitées.

La vulcanisation de l'élastomère est ensuite conduite de manière usuelle, avantageusement par un processus continu, comme un passage en tunnel d'air chaud, ou par un rayonnement UHF, etc...

Pour le mode de réalisation qui vient d'être décrit immédiatement ci-dessus, la poudre d'élastomère est avantageusement directement issue du procédé de fabrication de l'élastomère.

En variante, la poudre est obtenue par broyage cryogénique.

Dans une réalisation de ce procédé on prépare tout d'abord, pour obtenir une poudre, un mélange d'élastomère et des ingrédients usuels pour ces mélanges, puis on effectue un broyage cryogénique puis on procède à l'incorporation des microbilles de verre creuses préalablement traitées audit mélange qui est alors introduit dans la trémie d'alimentation de la boudineuse.

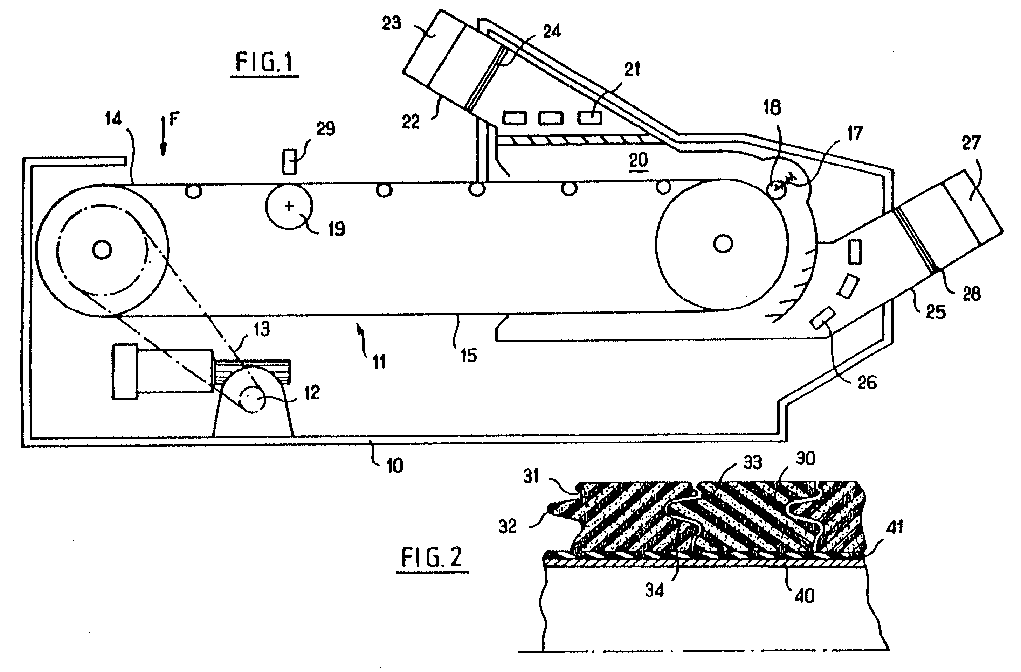

Pour la mise en oeuvre du procédé par un processus discontinu, l'invention envisage l'utilisation d'une machine du type de celle illustrée très schématiquement sur la figure 1. Elle comprend, monté dans un bâti 10, un tapis métallique sans fin 11 entraîné à partir d'un moteur 12 par une transmission à chaîne 13 et dont les brins opératoires 14 et 15, horizontaux, sont logés pour leur plus grande partie dans un tunnel 20 muni de rampes à rayonnement infra-rouge 21 et/ou de résistance chauffantes et auquel se raccorde la canalisation de sortie 22 d'un ventilateur 23 pour l'extraction et l'évacuation de la vapeur d'eau ou des vapeurs de solvant, le réglage du débit d'air étant obtenu à l'aide d'un papillon 24. A l'amont de la canalisation 22, dans le sens d'avance du tapis sans fin 11, débouche également dans le tunnel 20 une canalisation 25. Dans celle-ci sont placées des résistances électriques à ailettes de chauffage 26 et/ou des rampes à rayonnement infra-rouge pour le traitement de réticulation. Un ventilateur 27 assure la circulation de l'air chaud dont le débit est réglé à l'aide d'un papillon 28.

Dans une telle machine, et comme explicité ci-dessus, le mélange homogène de microbilles de verre creuses et d'élastomère est déposé sous forme d'une couche mince sur le brin supérieur 14 du tapis sans fin, à l'extérieur du tunnel 20 et au voisinage du début du brin 14, comme montré par la flèche F. Une racle 29 et un contre cylindre 19 permettent de régler l'épaisseur de la couche déposée. Complémentairement, un cylindre 18 dont la distance au tapis 11 peut être réglée par des moyens 17 et qui est placé entre les canalisations 22 et 25 permet de régler l'épaisseur du matelas obtenu par fabrication des couches minces successives comme explicité ci-dessus.

Dans un processus de fabrication en continu, on opère à l'aide d'une multiplicité de bacs adjacents à disposition horizontale, ou à disposition verticale, dont l'un est destiné à recevoir le latex, un autre les coagulants, etc... et qui sont parcourus par une bande transporteuse sans fin, laquelle traverse successivement des zones de séchage, par exemple à rayonnement infra-rouge, des zones de vulcanisation puis fait retour au bac de latex, etc...

L'invention est illustrée ci-après, et sans que ces indications aient quelque caractère limitatif que ce soit, par les exemples suivants mettant en oeuvre différentes formules de matériau d'isolation thermique selon l'invention.


I - MATERIAUX OBTENUS A PARTIR D'UN LATEX

## Exemple 1

On prépare un latex A dont les proportions en parties en poids, par rapport au caoutchouc, sont les suivantes :

```
Latex   de   caoutchouc naturel    (NR)   100
Soude, pour stabilisation du latex        0,3
Soufre                                    1,5
Oxyde de zinc                             1,5
Wingstay L (un produit anti-oxygène
     vendu sous cette dénomination par
     la société GOOD YEAR    ).           1,0
MBT Zn (mercaptobenzothiazole de zinc à
     titre d'accélérateur de vulcanisation) 1,2
DEDC Zn (diéthyldithiocarbamate de zinc
     à titre d'accélérateur de vulcani-
     sation)                              0,05
```

On ajoute à ce latex 35 parties en poids équivalent à 48 % en volume de microbilles de verre creuses commercialisées par la Société 3M sous la référence B 37/2000.

Ces microbilles ont une densité réelle moyenne de l'ordre de 0,37, une résistance à la pression de l'ordre de 14 MPa et une granulométrie telle que moins de 3 % en poids des microbilles de verre sont retenus sur le tamis 100 mesh (149 micromètres).

Préalablement à leur incorporation au latex, les microbilles de verre creuses ont été trempées dans une solution aqueuse d'un aminosilane, tel que celui vendu par la Société DOW CORNING sous la référence Z 6020 puis séchées.

Après mélange intime des microbilles de verre creuses et du latex on prépare, par la technique indiquée ci-dessus, c'est-à-dire le dépôt à la racle sur le tapis métallique de la machine montrée sur la figure 1, des couches dont l'épaisseur est comprise entre 0,5 et 1 mm.

La coagulation est obtenue par une déshydratation en étuve suivie d'un séchage de 2 heures à 80°C puis 12 heures à 40°C.

Pour la fabrication d'une plaque de matériau thermiquement isolant d'une épaisseur d'environ 10 mm, on superpose entre une douzaine et une vingtaine de couches et l'ensemble est vulcanisé à basse température, de l'ordre de 115°C pendant une durée d'environ 20 minutes.

Le matériau obtenu avait une densité $d = 0,57$ et un coefficient de conductivité thermique $\lambda = mWm^{-1}K^{-1}$.

## Exemple 2

On prépare un latex B ayant la formulation suivante, en parties en poids par rapport au caoutchouc :

```
Latex de polychloroprène (CR)
     (tel que vendu par la Société BAYER
     sous la dénomination BAYPREN T)      100
Potasse                                   0,35
Soufre                                    1,0
```

| Oxyde de zinc | 5,0 |
|---|---|
| Wingstay L (anti-oxygène) | 1,5 |
| Stabilisant | 1,0 |
| Emulsifiant | 1,5 |
| MBT, Zn, en tant qu'accélérateur | 1,0 |

Les microbilles de verre creuses mises en oeuvre sont du type B 28/750 de la Société 3M ayant une densité réelle moyenne de 0,28, une résistance à la pression de 5,2 MPa et une granulométrie telle que moins de 5 % en poids sont retenus sur le tamis de 80 mesh (177 micromètres).

Pour effectuer des essais comparatifs, on incorpore les microbilles de verre creuses traitées comme dans l'Exemple 1, au latex B suivant des proportions différentes et l'on opère ensuite comme dans l'Exemple 1, c'est-à-dire que l'on fabrique des couches élémentaires d'une épaisseur comprise entre 0,5 et 1 mm.

Dans cet exemple, toutefois, la coagulation est obtenue par le froid et elle est suivie d'un séchage en étuve jusqu'à un poids constant.

Pour la fabrication d'une plaque de matériau isolant d'une épaisseur d'environ 10 mm on superpose suivant un matelas une douzaine ou davantage de couches élémentaires et l'ensemble est vulcanisé à 125°C pendant environ 20 minutes.

Les résultats obtenus sont rassemblés dans le Tableau I ci-après, pour les exemples 2A, 2B et 2C.

### TABLEAU I

| Exemples | Latex | Proportion de microbilles B 28/750 | | Densité du matériau obtenu | Coefficient de conductibilité thermique $\lambda$ en mw.m$^{-1}$K$^{-1}$ |
|---|---|---|---|---|---|
| | | Poids | Volume | | |
| 2A | B | 25 | 60 | 0,67 | 119 |
| 2B | B | 34 | 70 | 0,57 | 108 |
| 2C | B | 47 | 80 | 0,52 | 88 |

## II - MATERIAUX OBTENUS A PARTIR D'UNE DISSOLUTION

### Exemple 3

On prépare tout d'abord la composition suivante en parties en poids par rapport au caoutchouc :

| Polychloroprène du type de celui vendu par la Société DISTILGIL sous la dénomination BUTACLOR M C 322 | 100 |
|---|---|
| Noir de carbone | 60 |
| Plastifiant aromatique | 16 |
| Oxyde de magnésium | 4 |
| Oxyde de zinc | 5 |
| Acide stéarique | 0,5 |
| Anti-oxyœène | 4 |
| Accélérateur ETU | 0,5 |
| Accélérateur DTMT | 0,5 |

On prépare ensuite une dissolution de caoutchouc en mélangeant 2,5 parties en poids de trichloréthylène pour une partie en poids de la composition.

On ajoute ensuite à la dissolution ainsi préparée 39 parties en poids équivalent à 70% en volume de microbilles de verre du type 37/2000, vendues par la Société 3M et dont les caractéristiques ont été indiquées ci-dessus en référence à l'Exemple 1, ainsi que en tant qu'agent de pontage, un isocyanate comme celui vendu par la Société BAYER sous la dénomination DESMODUR RF.

Les microbilles de verre creuses sont introduites dans la solution sous agitation et on prépare par une technique analogue à celle des exemples 1 et 2, c'est-à-dire par dépôt à la racle du mélange sur un support approprié, de minces couches élémentaires ayant une épaisseur de l'ordre de 0,5 à 1 mm.

Les couches sont séchées dans une étuve à une température de l'ordre de 70 °C jusqu'à obtention d'un poids constant, c'est-à-dire jusqu'à ce que le pourcentage de perte de poids, dû à l'élimination de solvant, ne varie sensiblement plus.

Après réunion entre elles d'une douzaine ou davantage de couches pour l'obtention d'une plaque d'environ 10 mm d'épaisseur, avantageusement à l'aide d'une presse de type usuel, la plaque est soumise à un traitement de vulcanisation conduit à 150°C et pendant une durée d'environ 20 minutes.

Les caractéristiques du matériau thermiquement isolant obtenu sont les suivantes :

Densité d = 0,55

Coefficient de conductibilité thermique :

$\lambda = 97$ mWm$^{-1}$K$^{-1}$

En variante, le solvant est du toluène utilisé dans une proportion identique, c'est-à-dire de 2,5 parties en poids de toluène pour une partie en poids de la composition.

## III - MATERIAUX OBTENUS A PARTIR D'UN ELASTOMERE PULVERULENT

### Exemple 4

Le caoutchouc mis en oeuvre est du type nitrile avec la composition suivante en parties en poids par rapport au caoutchouc :

| | |
|---|---|
| Caoutchouc nitrile du type de celui vendu par la Société GOODYEAR sous la dénomination CHEMIGIUM P.83 | 100 |
| Dioctylphtalate | 60 |
| Oxyde de zinc | 5 |
| Acide stéarique | 1 |
| Soufre | 1,25 |
| Accélérateur MTMT | 0,4 |

Les microbilles de verre creuses sont celles vendues par la Société 3M sous la référence 38/4000, c'est-à-dire des microbilles de verre creuses ayant une densité réelle moyenne de 0,38 et une résistance à la pression de 28 MPa.

Ces microbilles de verre creuses sont traitées comme indiqué dans l'exemple 1 puis elles sont ajoutées à la poudre d'élastomère dans une proportion de 70 parties en poids, équivalent à 60% en volume, et le mélange homogène est extrudé.

Le matériau obtenu est vulcanisé à 150°C pendant environ 20 minutes.

Ses caractéristiques sont les suivantes :

Densité d = 0,65

Coefficient de conductibilité thermique :

$\lambda = 110$ mWm$^{-1}$K$^{-1}$

### Exemple 5

On prépare tout d'abord un mélange d'une poudre ayant la composition suivante, en parties en poids, par rapport au coutchouc :

| | |
|---|---|
| Caoutchouc vendu par la Société CDF sous la dénomination NORSOREX | 100 |
| ZnO | 5 |
| Acide stéarique | 1 |
| CBS | 3 |
| Soufre | 2 |
| Somil A P | 300 |

A cette composition on ajoute alors des microbilles de verre creuses du type de celles utilisées dans l'Exemple 2 et vendues par la Société 3M sous la dénomination B 28/750.

Ces microbilles de verre creuses, préalablement traitées conformément au procédé décrit dans l'exemple 1, sont ajoutées suivant 244 parties en poids, c'est-à-dire 60 % en volume.

Le mélange homogène est ensuite mis en forme par simple dépose à la racle ou passage dans un organe conformateur.

Le matériau obtenu est vulcanisé et présente les caractéristiques suivantes :

Densité d = 0,65

Coefficient de conductibilité thermique :

$\lambda = 126$ mWm$^{-1}$K$^{-1}$

Il apparaît ainsi que le matériau selon l'invention présente de bonnes qualités d'isolation thermique pour le but recherché, avec un coefficient $\lambda$ de l'ordre de 90 à 130 mWm$^{-1}$K$^{-1}$, ainsi que de bonnes caractéristiques de résistance à la pression tout en étant facilement déformable.

En outre, l'adhérisation parfaite des microbilles de verre creuses à la matrice dans laquelle elles sont noyées confère au matériau selon l'invention d'excellentes propriétés de barrière anti-liquide, en particulier permet l'obtention d'un matériau s'opposant à la pénétration de l'eau, y compris à des températures de l'ordre de 120°C et plus.

Le matériau selon l'invention trouve ainsi une application particulièrement avantageuse dans la protection des conduits de transport de fluide chaud, qu'il s'agisse de vapeur d'eau dans des canalisations de chauffage urbain ou de gaz ou d'huile dans des pipelines sous-marins.

Dans ce dernier cas, en particulier, l'invention prévoit de conformer le matériau d'isolation thermique suivant des manchons 30, figure 2, dont une face frontale 31 présente une saillie annulaire 32 et dont la face frontale opposée 33 présente un évidement annulaire 34 de forme conjuguée de celui de la saillie 32.

Pour le calorifugeage d'une conduite, la canalisation proprement dite 40 est d'abord revêtue d'une couche anti-corrosion 41 en soi connue, sur laquelle les manchons 30 sont enfilés à glissement et avec laquelle ils sont solidarisés, le cas échéant, à l'aide d'adhésifs du type à haut module comme des époxy. La forme conjuguée ondulée des faces frontales antérieure et postérieure du manchon sur lesquelles sont rapportés des colles ou adhésifs du type à bas module comme des polyuréthanes, des polysulfures et/ou polychloroprènes, pour la solidarisation de manchons adjacents, contribue à l'obtention de meilleures caractéristiques d'isolation thermique.

De façon en soi connue, la gaine de manchons adjacents et contigus, dont l'épaisseur peut être de l'ordre de 5 à 40 mm, peut, si nécessaire, être revêtue d'un ou de plusieurs autres éléments de protection, par exemple métallique ou en matière plastique.

En variante, et compte tenu des qualités de souplesse et de déformabilité du matériau selon l'invention, la gaine de protection est réalisée par enroulement et collage sur la couche 41 d'une bande de matériau syntactique, tel que défini ci-dessus.

**Revendications**

1. Matériau d'isolation thermique du type syntactique d'une densité comprise entre environ 0,5 et 0,65 et d'un coefficient de conductivité thermique $\lambda$ compris entre environ 90 et 130 mWm$^{-1}$K$^{-1}$, ledit matériau résistant à une température de l'ordre de 120°C, étant pratiquement dépourvu de fluage à cette température sous une pression hydrostatique de l'ordre de 40 Bars et étant, en outre, suffisamment souple pour pouvoir subir un allongement de 7 à 10 % sans rupture et sans perte de ses propriétés, ledit matériau étant obtenu en incorporant dans une matrice une charge de microbilles de verre creuses dans une proportion de 40 à 80 % en volume par rapport à ladite matrice, laquelle est choisie parmi les élastomères du type caoutchouc naturel, polychloroprène, copolymère styrène-butadiène (SBR), copolymère butadiène-acrylonitrile (NBR), polynorbornène, éthylène-propylène-diènes monomères (EPDM), caoutchoucs butyle et analogues, la liaison des microbilles de verre creuses à la matrice étant réalisée pour un agent de pontage constitué par un isocyanate ou un silane organofonctionnel présent dans une proportion comprise entre 1 et 10 % en poids par rapport à la matrice élastomère.

2. Procédé pour la fabrication d'un matériau syntactique selon la Revendication précédente, caractérisé en ce que l'on incorpore la charge de microbilles de verre creuses dans la matrice, en ce que l'on mélange la charge et la matrice sans application d'efforts de cisaillement importants jusqu'à obtention d'un produit homogène et en ce qu'on soumet le produit à un traitement de réticulation.

3. Procédé selon la Revendication 2, caractérisé en ce que le traitement de réticulation est une vulcanisation.

4. Procédé selon la Revendication 2, caractérisé en ce que la matrice est sous forme d'un latex.

5. Procédé selon la Revendication 4, caractérisé en ce que préalablement à leur incorporation dans le latex les microbilles de verre creuses sont traitées à l'aide d'un agent de pontage comme un silane organofonctionnel.

6. Procédé selon la Revendication 2, caractérisé en ce que la matrice est sous forme d'une dissolution.

7. Procédé selon la Revendication 6, caractérisé en ce que les microbilles de verre creuses sont incorporées à la matrice simultanément à l'adjonction à cette dernière d'un agent de pontage verre-élastomère comme un isocyanate ou un silane organofonctionnel.

8. Procédé selon la Revendication 2, caractérisé en ce que la matrice est sous forme liquide.

9. Procédé selon la Revendication 2, caractérisé en ce que la matrice est sous forme de poudre.

10. Procédé selon la Revendication 9, caractérisée en ce que la poudre est directement issue du procédé de fabrication de l'élastomère ou est obtenue par broyage cryogénique d'un élastomère seul ou d'un mélange d'élastomère (s) et d'ingrédients comme des charges, des agents de protection et des agents de vulcanisation.

11. Procédé de fabrication d'un moyen d'isolation thermique à base du matériau selon la Revendication 1, caractérisé en ce qu'on fabrique successivement une pluralité de couches minces en ledit matériau, chacune desdites couches étant séchée complètement, en ce qu'on réunit entre elles sous légère pression ladite pluralité de couches et en ce qu'on procède alors au traitement de réticulation qui est avantageusement une vulcanisation.

12. Procédé selon la Revendication 11, caractérisé en ce que chacune desdites couches est déposée à la racle sur un support approprié et a une épaisseur comprise entre 0,5 et 1 mm.

13. Procédé selon la Revendication 11, caractérisé en ce qu'il est réalisé en continu dans une multiplicité de bacs adjacents à disposition horizontale ou à disposition verticale avec interposition entre eux de zones de séchage et, in fine, une zone de vulcanisation.

14. Moyen d'isolation thermique, utilisable notamment pour le calorifugeage de canalisations de transport d'un fluide présentant un gradient de température avec l'espace environnant, comme une conduite de transport d'huile ou de gaz de champs pétrolier off-shore, ou une canalisation de chauffage urbain, caractérisé en ce qu'il comprend un manchon en le matériau syntactique selon la Revendications 1 , ledit manchon étant limité sur ses faces frontales antérieure et postérieure par des surfaces ondulées de forme conjuguée permettant l'emboîtement de manchons adjacents.

15. Dispositif de calorifugeage de canalisations de transport d'un fluide présentant un gradient de température avec l'espace environnant, comme une conduite de transport d'huile ou de gaz de champs pétrolier off-shore, ou une canalisation de chauffage urbain, caractérisé en ce qu'il comprend une multiplicité de manchons selon la Revendication 14, lesdits manchons étant solidarisés les uns aux autres par leurs faces adjacentes à l'aide d'une colle ou d'un adhésif à bas module, avantageusement une colle ou un adhésif du type polyuréthanne, polysulfure et/ou polychloroprène, et avec une couche anti-corrosion, en soi connue, qui garnit ladite canalisation par l'intermédiaire d'une colle ou adhésif à haut module, avantageusement du type époxy.

**Patentansprüche**

1. Wärmeisolationsmaterial vom syntaktischen Typ einer Dichte zwischen etwa 0,5 und 0,65 und einem Wärmeleitkoeffizienten $\lambda$ zwischen etwa 90 und 130 mWm$^{-1}$K$^{-1}$, wobei dieses bei einer Temperatur in der Größenordnung von 120°C beständige Material praktisch frei von Fließen bei dieser Temperatur unter einem hydrostatischen Druck in der Größenordnung von 40 bar ist und im übrigen ausreichend nachgiebig ist, um eine Längung von 7 bis 10 % ohne Reißen und ohne Verlust seiner Eigenschaften erfahren zu können, wobei dieses Material erhalten wird, indem man in eine Matrix eine Charge aus hohlen Glasmikrokügelchen in einem Anteil von 40 bis 80 Vol.-% bezogen auf diese Matrix einarbeitet, wobei diese gewählt ist aus den Elastomeren vom Typ natürlicher Kautschuk, Polychloropren, Styrolbutadiencopolymer (SBR), Butadienacrylnitrilcopolymer (NBR), Polynorbornen, den Ethylpropylendienmonomeren (EPDM) und den Butylkautschuken und Analogen, wobei die Verbindung der hohlen Glasmikrokügelchen mit der Matrix herbeigeführt ist durch ein Brückenbildnermittel, das gebildet wird durch ein Isocyanat oder ein organofunktionelles Silan, welches in einem Anteil zwischen 1 und 10 Gew.-%, bezogen auf die Elastomermatrix, vorhanden ist.

2. Verfahren zur Herstellung eines syntaktischen Materials nach dem vorhergehenden Anspruch, dadurch gekennzeichnet, daß man die Charge aus hohlen Glasmikrokügelchen in die Matrix einarbeitet, daß man die Charge und die Matrix ohne Aufbringung von erheblichen Scherkräften mischt, bis man ein homogenes Produkt erhält und daß man das Produkt einer Vernetzungsbehandlung aussetzt.

3. Verfahren nach Anspruch 2, dadurch gekennzeichnet, daß die Vernetzungsbehandlung eine Vulkanisierung ist.

4. Verfahren nach Anspruch 2, dadurch gekennzeichnet, daß die Matrix die Form eines Latex hat.

5. Verfahren nach Anspruch 4, dadurch gekennzeichnet, daß vor ihrer Einarbeitung in den Latex die hohlen Mikroglaskügelchen mit Hilfe eines Brückenbildnermittels, wie eines organofunktionellen Silans, behandelt werden.

6. Verfahren nach Anspruch 2, dadurch gekennzeichnet, daß die Matrix die Form einer Dissolution hat.

7. Verfahren nach Anspruch 6, dadurch gekennzeichnet, daß die hohlen Glasmikrokügelchen in die Matrix eingeführt werden und gleichzeitig dieser ein Glas-Elastomer-Brückenbildnermittel, wie ein Isocyanat oder ein organofunktionelles Silan, zugesetzt wird.

8. Verfahren nach Anspruch 2, dadurch gekennzeichnet, daß die Matrix in flüssiger Form vorliegt.

9. Verfahren nach Anspruch 2, dadurch gekennzeichnet, daß die Matrix in Pulverform vorliegt.

10. Verfahren nach Anspruch 9, dadurch gekennzeichnet, daß das Pulver direkt aus dem Elastomerherstellungsverfahren stammt oder durch cryogenetisches Zerkleinern eines Elastomers allein oder eines Gemisches aus Elastomer (s) und Bestandteilen, wie Chargen, Schutzmitteln und Vulkanisationsmitteln, erhalten wird.

11. Verfahren zur Herstellung eines Wärmeisolationsmittels auf der Basis des Materials nach Anspruch 1, dadurch gekennzeichnet, daß man nacheinander eine Vielzahl dünner Schichten aus diesem Material herstellt, wobei jede dieser Schichten vollständig getrocknet wird, daß man untereinander unter leichtem Druck diese Vielzahl von Schichten vereinigt und daß man dann die Vernetzungsbehandlung, bei der es sich vorzugsweise um eine Vulkanisierung handelt, vornimmt.

12. Verfahren nach Anspruch 11, dadurch gekennzeichnet, daß jede dieser Schichten mit der Rakel auf einem geeigneten Träger und mit einer Dicke zwischen 0,5 und 1 mm abgeschieden wird.

13. Verfahren nach Anspruch 11, dadurch gekennzeichnet, daß es kontinuierlich in einer Vielzahl benachbarter Behälter horizontaler oder vertikaler Anordnung unter Zwischenschaltung von Trocknungszonen zwischen diesen und schließlich einer Vulkanisationszone durchgeführt wird.

14. Wärmeisolationsmittel, insbesondere zur Wärmedämmung von Transportleitungen für ein Fluid verwendbar, das einen Temperaturgradienten mit dem umgebenden Raum hat, wie beispielsweise eine Öl- oder Gastransportleitung einer Offshoreerdöllagerstätte oder einer städtischen Heizleitung, dadurch gekennzeichnet, daß es einen Stutzen aus syntaktischen Material gemäß Anspruch 1 umfaßt, wobei dieser Stutzen auf seinen vorderen und hinteren Stirnflächen durch gewellte Flächen konjungierter Gestalt begrenzt ist, die das Einstecken benachbarter Stutzen bzw. Muffen ermöglicht.

15. Wärmedämmungsvorrichtung für Transportleitungen eines Fluids, das einen Temperaturkoeffizienten mit dem umgebenden Raum, wie eine Öl- oder Gastransportleitung von Offshoreerdölproduktionsstätten oder eine städtische Heizleitung aufweist, dadurch gekennzeichnet, daß sie eine Vielzahl von Stutzen bzw. Muffen gemäß Anspruch 14 umfaßt, wobei diese Stutzen fest aneinander über ihre benachbarten Flächen vermittels Klebstoff oder einem Adhäsivmittel niedrigen Moduls befestigt sind, vorzugsweise einem Kleber oder einem Ahäsivmittel vom Typ Polyurethan, Polysulfid und/oder Polychloropren und mit einer an sich bekannten Antikorrosionsschicht, welche diese Leitung mittels eines Klebers oder eines Adhäsivmittels hohen Moduls, vorzugsweise vom Typ Epoxy, auskleidet.

## Claims

1. A syntactic type thermal insulating material having a relative density lying in the range about 0.5 to about 0. 65 and a thermal conductivity coefficient $\lambda$ lying in the range about 90 to about 130 mMm$^{-1}$K$^{-1}$, said material withstanding a temperature of about 120°C, having practically no creep at this temperature and under a hydrostatic pressure of about 40 bars, and also being sufficiently flexible to be capable of being subjected to an elongation of 7% to 10% without rupture and without losing its properties, said material being obtained by incorporating a filler of hollow glass microbeads in a matrix, the microbeads constituting 40% to 80% by volume relative to said matrix, which matrix is selected from elastomers of the following types : natural rubber, polychloroprene, styrene butadiene copolymer (SBR), acrylonitrile butadiene copolymer (NBR), polynorborenne, ethylene propylene diene monomers (EPDM), butyl rubbers, and the like ; bonding between the hollow glass microbeads and the matrix being obtained by means of a bridging agent constituted by an isocyanate or an organo-functional silane constituting between 1% and 10% by weight relative to the elastomer matrix.

2. A method of manufacturing a syntactic material according to claim 1, characterized in that the filler of hollow glass microbeads is incorporated in the matrix, in that the filler and the matrix are mixed together without applying large shear forces until a uniform product is obtained, and in that the product is subjected to cross-linking treatment.

3. A method according to claim 2, characterized in that the cross-linking treatment is vulcanization.

4. A method according to claim 2, characterized in that the matrix is in the form of a latex.

5. A method according to claim 4, characterized in that prior to being incorporated in the latex, the hollow glass microbeads are treated by means of a bridging agent such as an organo-functional silane.

6. A method according to claim 2, characterized in that the matrix is in the form of a solution.

7. A method according to claim 6, characterized in that the hollow glass microbeads are incorporated in the matrix simultaneously with a glass-elastomer bridging agent such as an isocyanate or an organo-functional silane being added thereto.

8. A method according to claim 2, characterized in that the matrix is in liquid form.

9. A method according to claim 2, characterized in that the matrix is in powder form.

10. A method according to claim 9, characterized in that the powder comes directly from the method of manufacturing the elastomer or is obtained by cyrogenic grinding of an elastomer on its own or of a mixture of elastomer(s) and of ingredients such as fillers, protection agents, and vulcanization agents.

11. A method of manufacturing thermal insulation means based on the material of claim 1, characterized in that a plurality of thin layers of said material are fabricated in succession, each of said layers being completely dry, in that said plurality of layers are joined together under slight pressure, and in that cross-linking treatment is then applied, which treatment is advantageously vulcanization.

12. A method according to claim 11, characterized in that each of said layers is deposited on an appropriate substrate by means of a spreader, and has a thickness lying in the range 0.5 mm to 1 mm.

13. A method according to claim 11, characterized in that it is performed continuously in a multiplicity of adjacent horizontally or vertically disposed containers with interposed drying zones, followed by a final vulcanization zone.

14. Thermal insulation means usable in particular as lagging for pipes for conveying a fluid having a temperature gradient with the surrounding environment, such as a duct for conveying oil or gas from an off-shore oil field or an urban heating pipe, the thermal insulation means being characterized in that it comprises a sleeve made of the syntactic material of claim 1, said sleeve being delimited on its leading and trailing end faces by corrugated surfaces of complementary shape enabling adjacent sleeves to be interfitted.

15. A system for lagging pipes for transporting a fluid having a temperature gradient with the surrounding environment, such as a duct for transporting oil or gas from off-shore oil fields, or an urban heating pipe, the system being characterized in that it comprises a multiplicity of sleeves according to claim 14, said sleeves being fixed to one another via their adjacent faces by means of a low modulus adhesive or glue, advantageously an adhesive or a glue of the polyurethane, polysulfide, and/or polychloroprene type, and fixed to a conventional anti-corrosion layer covering said pipe by means of a high modulus adhesive or glue, advantageously of the epoxy type.

FIG.1

FIG.2